# EUROPEAN PATENT SPECIFICATION

(11) **EP 0 815 685 B1**
(45) Date of publication and mention of the grant of the patent: **05.06.2002**
(21) Application number: 96903118.6
(22) Date of filing: 20.02.1996
(51) Int. Cl.: H04N 7/01, H04N 7/015

(54) **MOVING IMAGE REPRODUCTION SYSTEM**
SYSTEM ZUR WIEDERGABE VON BEWEGTEN BILDERN
SYSTEME DE REPRODUCTION D'IMAGES MOBILES

(30) Priority: 20.02.1995 GB 9503303; 07.04.1995 GB 9507233
(43) Date of publication of application: 07.01.1998
(73) Proprietor: SNELL & WILCOX LIMITED, Twickenham, Middlesex TW1 1RQ (GB)
(72) Inventor: SNELL, Roderick, Hampshire GU32 1AE (GB); WATKINSON, John, Reading RG7 3BQ (GB)
(74) Representative: Garratt, Peter Douglas
(86) International application number: GB9600388
(87) International publication number: WO9626606

(56) References cited:
- WO-A-87/05770
- WO-A-89/01270
- WO-A-93/20653
- WO-A-93/22877
- WO-A-94/01970
- FR-A- 2 702 915
- GB-A- 2 100 953
- GB-A- 2 249 908
- GB-A- 2 264 414
- US-A- 5 023 716
- US-A- 5 235 420

## Description

This invention relates to the reproduction of moving images and - in the most important aspect - to the application of digital technology to the portrayal of moving images with the aim of achieving considerably improved accuracy and realism.

Existing moving image portrayal systems such as film and television were designed before a full understanding of sampling theory and its application to several dimensions was understood. As a result these systems were developed empirically and their quality was assessed subjectively using the display technology of the day. The dramatic improvements in display technology which continue to take place serve to reveal shortcomings in empirically designed systems. These are particularly noticeable in the area of motion portrayal. Unfortunately the so-called High-Definition television systems do no more than to take an existing flawed, empirically designed, standard-definition system and to increase the number of lines in the image. No meaningful effort has been made to improve motion portrayal and so the results are in a dynamic sense no more realistic than with standard definition; yet enormously increased bandwidth is required.

This situation has arisen - it is submitted - because of the widespread belief that all that is necessary in television is to provide frames of a given static resolution at a rate which avoids flicker. This is not believed to be the case by the present inventors. It is proposed that the true criterion for motion picture portrayal is not freedom from flicker or high static resolution but is in fact dynamic resolution. Dynamic resolution in a television system is here defined as the apparent resolution obtained when a moving object before the camera is tracked by a moving eyeball. The eye tracking follows the optic flow of the moving object rendering it stationary on the retina and allowing the eye time to resolve detail. Relative to the television system, the object is moving and produces high frequencies on the temporal axis. If these are not reproduced at the display, dynamic resolution is lost.

Existing moving picture portrayal systems use a fixed temporal sampling rate which is known as the field or frame rate. There are many such rates, e.g. 24 Hz, 25 Hz and 29.97 Hz. Generally speaking, the frame rates used in these systems result in temporal subsampling such that dynamic resolution is poor and the motion portrayal is not accurate but is aliased. As there are so many different frame rates in use, a difficulty arises because program material which is acquired at one rate cannot be used in a system designed for another rate without a standards conversion process. Existing motion compensated standards convertors attempt conversion of the frame rate by approximating the optic flow axes from the input frames and interpolation along those axes. For example, see GB-A-2249908, in which the system described employs motion compensation in field rate conversion. In the presence of aliasing it is not possible unambiguously to reconstruct the original optic flow axes and so accurate standards conversion is impossible.

The use of data reduction or compression is becoming increasingly important as a means to deliver television signals with reduced cost. Known compression systems use the principle of motion compensation in which the optic flow axes are used to predict the location of an object in a future frame. The current data representing the image are shifted to the new location to form a predicted image and it is then only necessary to send the differences between the predicted image and the actual image. In theory and in practice, compression systems work best with input signals of the highest quality. It is well known, for example, that noisy signals do not compress well because the compressor cannot distinguish the noise from picture detail. It is also the case that motion compensated compression can only work well if the motion information is accurate.

Unfortunately, today's compression systems are designed to do no more than compress existing television signals in which important motion information from the original scene is missing. Known systems have a fixed frame rate which is excessive on still or slow moving scenes but inadequate in the presence of motion. Errors due to the compression process are masked by shortcomings in the original signal. As a result existing compression systems may not be suitable for third generation moving picture portrayal systems and a suitable compression technique is described here.

Attempts have been made to address some of these shortcomings. For example, WO 87/05770 discloses an arrangement in which fixed and motion-compensated sub-sampling modes are chosen according to the incoming picture material. WO 93/20653 discloses an encoding operation which adds to a base layer received by all subscribers a further layer which may be received and combined with the base layer to produce a higher quality video signal.

Existing television signals use the principle of interlace in which the odd numbered lines of a picture are presented in one field whereas the even numbered lines are presented in a second field. In USA 60 fields per second is a standard, whereas in Europe 50 fields per second is typical. It can be seen from the vertical/temporal spectrum of an interlaced signal that there is a triangular passband extending from half the number of lines in the frame vertically to half the field rate temporally. Thus maximum vertical resolution is only possible in the absence of motion - and equally - maximum motion portrayal is only obtained in the absence of vertical detail. Thus interlaced systems cannot deliver high dynamic resolution and on real picture material the system fails. In the presence of vertical detail, accurate motion estimation becomes impossible.

It is an object of the present invention to provide a moving picture portrayal system capable of delivering moving pictures of substantially greater realism than with prior methods, especially in - but not restricted to - the area of motion portrayal.

Accordingly, the present invention which is defined in claim 1, consists in a moving picture portrayal system in which: a camera has a high temporal sampling rate in order to minimise temporal aliasing; optic flow axes of the images from said camera are computed through motion estimation and changes in said images determined with respect to said axes; optic flow axis information and image change information is re-sampled at instants which are determined by the temporal spectrum of the optic flow axis information and image change information, respectively, to create a signal having no defined picture rate, which picture rate varying according to the program content; said optic flow axis and image change information is communicated to a display processor in packets each of which contains a time stamp; and said display processor receives said information to recreate moving images by motion compensated interpolation at a standard or any desired display refresh rate which is not determined by said camera sampling rate and not determined by said re-sampling instants.

Thus, the present invention provides an improved moving picture portrayal system which allows correct portrayal of motion, and reproduction of high temporal frequencies at the display.

The invention will now be described by way of example with reference to the accompanying drawings in which:-
Figure 1 is a block diagram of apparatus according to one embodiment of the present invention;
Figure 2 is a block diagram illustrating one arrangement of the source processor shown in Figure 1:
Figure 3 is a diagram illustrating the concept of optic flow axis.

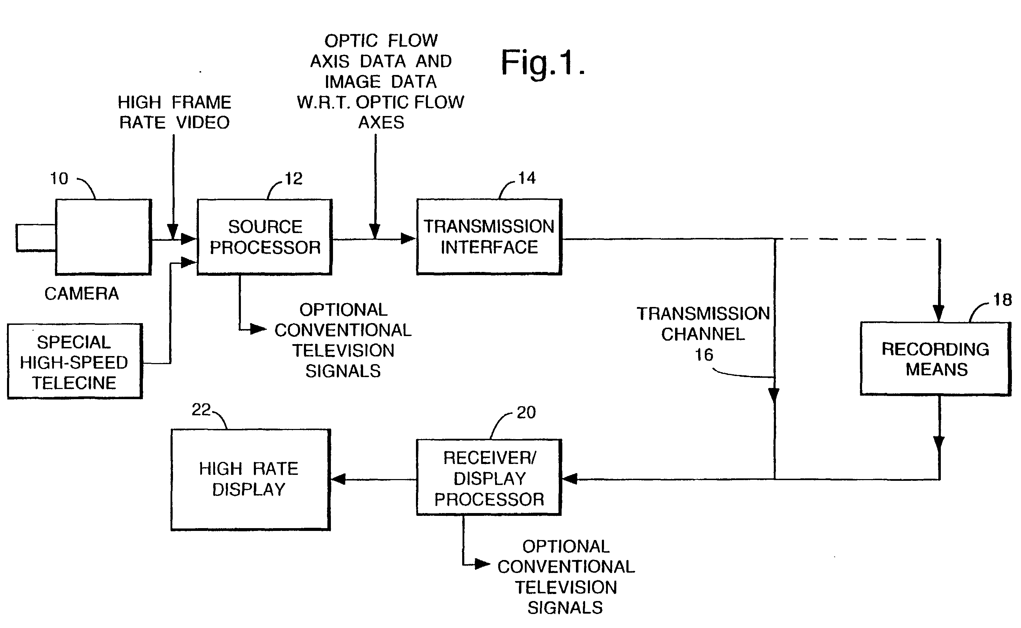

The system is shown in Fig.1 and consists of a camera (10), a source processor (12), a transmission interface (14), a transmission channel (16), an optional recorder (18), a display processor (20) and a display means (22). A compression unit may be included in or associated with the source processor and a matching decoder may be included in or associated with the display processor. Optionally the processors may include circuitry which outputs television signals according to one or more existing standards for display on conventional television receivers or monitors. Whilst all of the potential quality of the claimed method will not be apparent using such a display, the quality will nevertheless be considerably better than that obtained from a conventional signal source.

As an alternative to an electronic camera, a film camera similarly operating at an elevated capture rate may be used, with a telecine machine and appropriate processing unit.

Conventional television systems have fixed scanning parameters. The frame rate, the number of lines per frame and the number of pixels per line are generally the same in the camera, transmission system and display. It is a fundamental assumption of this invention that the scanning parameters are advantageously different in camera, transmission and display. The transmitted signal is not a conventional temporally sampled image and does not have a frame rate as such. Instead, an accurately portrayed motion signal, free from aliasing, is sent alongside image data from which conventional television signals having any desired frame rate can be produced. Consequently the display processor or decoder can output television signals having any existing or future frame rate which are free from subsampling artifacts. Such signals may be with or without interlace and may be converted to film with a suitable apparatus. Thus the claimed method finds particular application in production systems where it will be necessary to provide the output material in a variety of television and film formats. Output formats will be delivered with quality which is restricted only by the parameters of the formats themselves.

The camera of Fig.1 preferably should not use interlace. It may be implemented using CCD sensors but other techniques are not excluded. Several sensors and a suitable beam splitter may be used if coloured pictures are required. In the case of the CCD embodiment the camera should have a large number of lines of sensing elements. A typical value would be 1200 but other values are not excluded. The number of sensing elements along each line should be such that a reasonable balance between horizontal and vertical resolution is obtained. It is preferable if some form of spatial anti-aliasing filtering means is provided to prevent detail beyond the capabilities of the CCD element spacing from being sampled.

The camera should run at a high temporal sampling rate. A value of 100 Hz is typical but other values are not excluded. The camera must be designed to be free of temporal aperture effects such as lag.

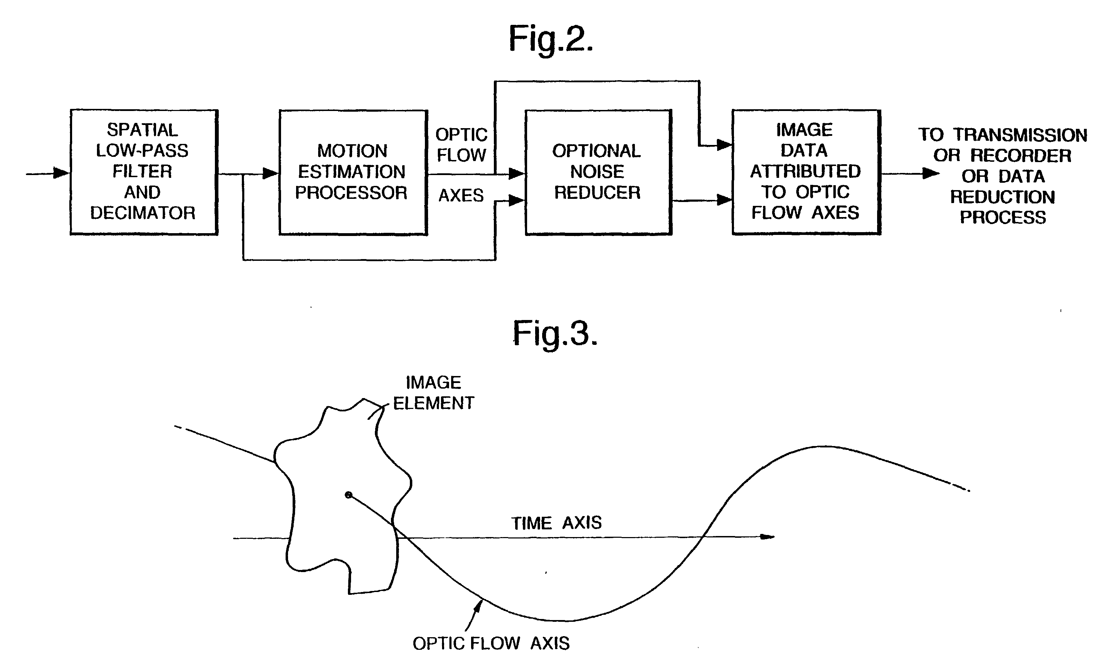

The signals from the CCD sensor may be converted into colour difference representations and advantageously may be converted to the digital domain for the purposes of processing. The processor is shown in outline in Fig.2. The use of practical CCD sensors results in an unavoidable aperture effect which causes loss of resolution. The actual resolution in the output data is considerably less than ideal. Following the conversion, each image or frame is spatially low pass filtered and downsampled to a new spatial sampling grid which is more appropriate to the actual signal resolution. In other words the CCD sensor is being spatially oversampled. The downsampled frame might contain around 600 pixels vertically by 800 horizontally in a 4:3 aspect ratio system. In a 16:9 aspect ratio system the figures might be 600 x 1000. Other pixel counts and aspect ratios are possible.

The downsampled frames are sent to a motion estimation processor. This compares a series of images and locates similar objects in each in order to measure motion between frames. The axes of optic flow which join the same points on objects in different frames are identified. The absence of interlace and the high temporal sampling rate ensure that the motion estimation is not impaired by operating on a subsampled signal. An advantageous method of motion estimation in the claimed method is the known technique of phase correlation in which the phases of Fourier transforms of successive frames are compared. However, other motion estimation techniques may also be used. For each pixel in the downsampled frame a motion vector is determined which denotes in two dimensions the velocity of the pixel.

Running a CCD camera at high temporal sampling rates results in a short exposure for each frame and this will cause individual frames to be noisier than in a conventional camera. However, over a given timespan the same light energy is available but in a larger number of frames and so it is possible to use a noise reduction system whose output will have the same signal to noise ratio as a conventional camera. Such a noise reduction unit must use motion compensation in order to prevent unwanted reduction in dynamic resolution and other artifacts. As high quality motion vectors are available from the motion estimation system then they can be applied to the noise reduction.

The noise reduced pixel data and the motion data are combined such that each pixel on the screen is represented by a five parameter vector describing, for example, luminance, R-Y, B-Y, vertical velocity and horizontal velocity. The colour difference samples may be subsampled with respect to the luminance and so not every pixel will have colour difference data. Some pixels may be represented by a three parameter vector: luminance, vertical velocity and horizontal velocity.

Using the combined pixel and motion data it is possible to locate optic flow axes passing through the three dimensional spatio/temporal volume. An optic flow axis begins where an object moves into the frame from outside or is revealed by diverging motion of another object. An optic flow axis terminates when an object moves out of the frame or is obscured by another converging object. Optic flow axes are also interrupted by editing.

The transmission system disclosed here does not use frames which are updated on the time axis as in conventional television or film systems. Instead the optic flow axes are transmitted along with information describing how the attributes of brightness and colour difference vary not along the time axis but with respect to said optic flow axes.

Fig.3 shows the principle for an element of the display. The optic flow axes are transmitted in any suitable form, including but not restricted to transmission of motion vectors with every frame as shown. The receiving device now has an accurate knowledge of how a picture element moved in the spatio/temporal volume. Alongside the transmission of each optic flow axis is sent luminance and colour difference data. This can be transmitted in any suitable form, including but not restricted to transmission of pixel data with every frame. In this form the quantity of data to be sent will be quite high as up to five parameters are sent per pixel. However the data rate is comparable to that obtained by digitizing a conventional high definition signal and the results upon final display will be much better. The signal may conveniently be edited in this form, although editing may also be possible in subsequent forms of the signal.

Upon considering how the signal described should be displayed the advantages of the method will become apparent. Any frame rate with or without interlace can be obtained with ease because the motion vectors are transmitted with the pixel data and a motion compensated standards conversion stage can be implemented very easily. As the transmitted data are not aliased such a standards conversion will be transparent. The display means will advantageously have a large number of lines, typically but not restricted to 1200. A two dimensional spatial interpolation is used to upconvert the transmitted pixel array to a signal suitable for display with a larger number of lines. Displays are not capable of displaying the theoretical resolution which their line spacing allows because of aperture effects and so displaying in the transmission line standard inevitably impairs resolution. Upconverting for display in this way is a form of spatial oversampling which overcomes the display aperture effect and in fact uses it to render the raster invisible.

The nature of the signal described is such that it is highly amenable to the application of compression techniques. The optic flow axis in typical program material only infrequently contains rapid changes in direction as real objects cannot display unbounded acceleration. Thus the optic flow axes can be represented by a compressed data stream which sends infrequent axis locations and uses suitable interpolation on reception. The period between updates of the optic flow axis can vary according to the severity of curvature such that more data are sent during periods of object acceleration. An interpolation algorithm such as a cubic spline can restore a close approximation to original axis. The adoption of a high temporal sampling rate at the camera ensures that the detail of the optic flow axis is accurately known so that the transmitted data rate can accurately adapt. It is also possible to reduce the effects of camera shake by temporally low pass filtering the optic flow data globally over the entire image.

Typical program material often contains large moving objects, and the optic flow axes will be parallel within such objects. In this case it is only necessary to transmit a single optic flow axis along with boundary data specifying which axes are parallel to it. To take an extreme example, a pan on a still scene would require only one optic flow axis to describe the whole picture.

In typical program material there is a great deal of similarity between the data describing an object at one point on the optic flow axis and the data at subsequent points. This is because the opticflow axis is stationary with respect to the object. Thus it is possible to use differential coding so that only the differences in data are sent. Also the rate of transmission may be varied according to the rapidity with which object data change as they move along the optic flow axis. For example if an object is moving under uniform illumination its appearance will not change as it moves and difference data will be minimal. It will be possible to describe the object infrequently and deduce its appearance in intermediate images by motion compensated interpolation. However, should an object move into shade, large difference data will need to be transmitted promptly. Image revelation due to diverging optic flow axes will require image data to be sent to describe the newly revealed area. Obscuration due to converging axes requires no new data as the decoder can compute which image data to reject. A cut edit would also need a large pixel data flow and new motion parameters. Thus the transmission sampling rate of image data along the optic flow axis can vary dynamically with program content. Naturally the data rate can be different for each set of axes. If one object is moving into shade it will need more data than a nearby object which is still under uniform illumination. In the case of a camera pan, very little motion information is needed, but there will be considerable image revelation data to be sent.

Consequently the temporal sampling rate of the optic flow axis data and the temporal sampling rate of the pixel data are both variable as necessary to depict the picture content, hence the earlier assertation that the transmitted signal does not have a frame rate as such. The compression factor achieved will be variable according to the picture content. Unlike most compression systems, the data stream obtained by the claimed method is substantially reversible because the sampling rates adapt to suit the spectrum of the signals and no irreversible requantizing is necessary although this can be used in addition if the consequent loss of image quality can be accepted. The spectra of the signals are accurately known because of the use of a high temporal sampling rate at the camera and so an appropriate transmission sampling rate can readily be computed.

As the transmitted data do not have a frame rate as such, then all display frame rates and all existing scanning standards with or without interlace can be obtained with equal ease. It is advantageous for the display to use the highest frame rate of which it is capable in order to improve the portrayal of motion.

The system must transmit optic flow information and picture information without a defined frame rate. An optic flow axis is an attribute of an object and so the data must relate to objects. The lack of a frame rate means that a system which transmits data packets containing time stamps is particularly appropriate.

The receiver builds an output picture by motion compensated interpolation using the motion vectors. Moving objects obscure and reveal other objects as they move. The obscuration is not a problem because existing information is discarded in such areas: revealed objects, however, require new data to describe them. A known solution to this difficulty is the use of "backward" motion vectors which indicate where a particular part of the picture was coming from. By carrying out a "predication" from a point in the future to a point in the past revealed areas become obscured areas and are handled without difficulty. It is therefore advantageous for backward as well as forward motion vectors to be transmitted.

The luminance and chrominance information about the moving object is given by luminance and colour difference values at defined spatial positions relative to the position of the object. This information may be compressed by many known techniques including, for example, having more luminance than chrominance sample points, transmitting a transform of the sample values, or transmitting differences rather than absolute values . In the example which follows luminance and/or chrominance sample values are transmitted.

There are advantages in using a hierarchical coding structure in which parts of objects are described as sub-objects relative to a "parent" object.

One example of a data format is as follows:-

### OBJECT DATA PACKET

Object name; Time stamp
Position of object datum
Forward motion vector, Magnitude; Direction
Backward motion vector; Magnitude; Direction
Video data
Pixels to be modified or added
First pixel position relative to object datum
Y value
C_{B} value
C_{R} value
Data for other pixels
Pixels no longer to be part of this object
First pixel position relative to object datum
Positions of other pixels to be removed

### SUB-OBJECT DATA PACKET

Sub-Object name; Parent object; Time stamp
Position relative to patent object
Forward motion vector relative to parent object, Magnitude: Direction
Backward motion vector relative to parent object; Magnitude;
Direction
Video data
Pixels to be modified or added
First pixel position relative to sub-object datum
Y value
C_{B} value
C_{R} value
Data for other pixels
Pixels no longer to be part of sub-object
First pixel position relative to object datum
Positions of other pixels to be removed

Not all the data elements need be present in every packet. Only the object name and the time stamp are mandatory; there need only be one other data item. In a variation, data can be included concerning the object size or its orientation in terms of angular rotation. A value for gain can also be included, to enable simple coding of changes in lighting which effect all pixels in the object, uniformly.

Known compression systems do no more than to compress an existing television standard so that it can be conveyed with a smaller data rate. Existing television signals were not designed to be used with compression systems. It has hitherto generally been the case that the more accurate the transmission of moving pictures becomes, the more bandwidth is required.

The method and apparatus described here differs in principle from such known approaches because the main goal is not to reduce the data rate but accurately to portray moving pictures without unconstrained bandwidth. However, the process of determining the optimum way in which such a portrayal should take place simultaneously reveals the optimum method of source coding for a compression system. It is a consequence of finding the most faithful portrayal method that an efficient compression method has also been found. Using subjectively lossless compression in conjunction with the system disclosed here yields pictures of unparalleled realism. Using lossy compression with said system yields pictures which have minimal artefacts.

Known compression systems have a frame rate or picture rate such that information is sent allowing the reconstruction of pictures equally spaced on the time axis. The claimed system does not have a frame rate and the information sent can be used by a suitable decoder to reconstruct pictures at arbitrary points on the same axis. Thus the decoder can produce pictures at any frame rate with equal high quality.

Information is sent accurately describing the trajectory of all optic flow axes from their creation to their termination. An optic flow axis comes into being when the motion estimator determines a new event such as an object entering the frame or being revealed by another moving object. The optic flow axis may describe a single pixel, but in real images one axis will describe a finite area which may grow or contract dynamically as concealment or revelation takes place. The vector assignment process of the encoder produces maps which determine the extent of an object having a single optic flow axis. As real moving objects have bounded acceleration, the curvature of optic flow axes is limited and they can be described infrequently and aperiodically as can the assignment maps. The location of an optic flow axis and the extent of an object can be computed for any time by interpolation.

The way in which the appearance of the object changes with respect to its position along the optic flow axis is also transmitted. Such transmissions may use absolute or intra coded data or differential data and may be aperiodic as required. When the appearance of an object does not change, no data need be transmitted, conversely objects moving into shade or leaves in a breeze would require frequent descriptions. A typical picture would contain many differently moving objects which could each be described as often as required at independent times. This approach also allows for optic flow axes to intersect in the case of transparent objects. An object moving behind glass can be portrayed simply as difference data with respect to the glass.

Known motion compensated compression systems do not send aperiodic optic flow data or aperiodic image data. In known systems the motion vectors are periodic and relate to arbitrary rectangular image areas and not to object boundaries. Furthermore in known systems the image data or image difference data are sent periodically, time coincident with the motion vectors. In such systems, the vectors do not need to be accurate because they exist to minimise the image difference data and not to portray motion accurately.

Situations will arise where, because of bandwidth restrictions in a transmission channel, lossless compression is not sufficient. A variety of strategies can be employed for further bandwidth reduction. One such technique might "lose" spatial resolution whilst another preserves spatial resolution at the cost of a reduction in temporal resolution. In one approach, a decision would be made "upstream" in the transmission chain on whether to employ a transmission mode optimised in the one case spatial and in the other case temporal frequencies. Such a decision might be based on objective criteria or a subjective view of the picture content. In an ingenious alternative forming part of the present invention, the decision on which transmission mode to employ is made downstream in the transmission chain. In one form, a signal is transmitted according to one mode, with an accompanying label indicating one or more alternative available modes of transmission. The user is then able to select interactively which mode to select. The modes of transmission might be available in parallel or time multiplex.

This use of labels to contain an indication of available modes of transmission is only one example of the uses to which labels could be put. It will be helpful, for example, for information to be supplied in more general terms on what processing a signal has undergone so that, for example, when information is lost because of bandwidth restriction, this factor is taken into account in any subsequent processing.

The use of a so-called "back" channel enabling a user interactively to select a mode of transmission, preferably utilising labels which indicate the modes which are available, can be extended beyond the case where the transmission channel bandwidth forces a compromise between spatial and temporal resolution. In a further embodiment of the present invention, a video signal produced at a relatively high bandwidth, preferably using the techniques described earlier in this specification, is transmitted at a deliberately reduced bandwidth, probably corresponding in picture quality with "normal" television quality. A specific user, seeing material which is of particular interest, then has the option of requesting via the back channel that the signal be transmitted at higher bandwidth. This request would normally attract an additional fee, the level of which might vary with picture material with a tariff conveniently forming part of the label as previously described.

## Claims

1. A moving picture portrayal system comprising:
a camera having a high temporal sampling rate in order to minimise temporal aliasing;
means for computing optic flow axes of the images from said camera through motion estimation and for determining changes in said images with respect to said axes;
means for resampling said optic flow axis information and image change information at instants which are determined by the temporal spectrum of the optic flow axis information and image change information, respectively, to create a signal having no defined picture rate, which picture rate varyies according to the program content;
means for communicating said optic flow axis and image change information to a display processor in packets each of which contains a time stamp; and
said display processor is adapted to receive said information to recreate moving images by motion compensated interpolation at a standard or any desired display refresh rate which is not determined by said camera sampling rate and not determined by said re-sampling instants.

2. A system according to Claim 1, in which the optic flow axis information provides motion information to control a motion compensated noise reduction process.

3. A system according to Claim 1, in which spatial oversampling is employed at the camera and/or the display.

4. A system according to any one of the preceding claims, in which the temporal sampling rate of the camera is 100 Hz.

5. A system according to any one of the preceding claims, in which a signal is transmitted through a bandwidth limiting transmission channel in at least two modes which differ in the relative bandwidth reduction of temporal and spatial frequencies, the display processor being adapted to enable selection of the appropriate mode for display, dependent upon picture content.

6. A system according to Claim 5, wherein a signal is transmitted in one mode with a label indicating the availability of other modes, the display processor being adapted to enable interactive selection of an alternative mode for transmission.

## Patentansprüche

1. Bewegtbild-Portraitsystem, dass folgendes umfasst:
eine Kamera, die eine hohe zeitliche Abtastrate aufweist, um ein zeitliches Aliasing zu minimieren;
ein Mittel zum Berechnen optischer Flussachsen der Bilder von der Kamera durch Bewegungsschätzung und zum Bestimmen von Änderungen in den Bildern bezüglich der Achsen;
ein Mittel zum Neuabtasten der optischen Flussachseninformation und der Bildänderungsinformation zu Zeitpunkten, die durch das temporäre Spektrum der optischen Flussachseninformation und Bildänderungsinformation jeweilig bestimmt werden, um ein Signal zu erzeugen, das keine definierte Bildrate aufweist, wobei die Bildrate gemäß dem Programminhalt variiert;
ein Mittel, um die optische Flussachse und eine Bildänderungsinformation zu einem Anzeigeprozessor in Paketen zu übermitteln, die jeweils einen Zeitstempel enthalten; und
der Anzeigeprozessor ist angepasst, die Information zu empfangen, um sich bewegende Bilder durch bewegungskompensierte Interpolation bei einer Standard- oder jeder gewünschten Anzeigenauffrischrate bzw. Bildauffrischrate neu zu erzeugen, die nicht durch die Kameraabtastrate bestimmt ist und nicht durch die Zeitpunkte des Neuabtastens bestimmt ist.

2. System nach Anspruch 1, bei dem die optische Flussachseninformation eine Bewegungsinformation bereitstellt, um einen bewegungskompensierten Rauschreduktionsprozess zu steuern.

3. System nach Anspruch 1, bei welchem räumliches Überabtasten bei der Kamera und/oder der Anzeige verwendet wird.

4. System nach irgendeinem der vorgehenden Ansprüche, bei welchen die temporäre Abtastrate der Kamera 100 Hz beträgt.

5. System nach irgendeinem der vorgehenden Ansprüche, bei welchen ein Signal durch einen Bandbreiten-Begrenzungs-Übertragungskanal in wenigstens zwei Modi übertragen wird, die sich in der relativen bandbreiten Reduktion von zeitlichen und räumlichen Frequenzen unterscheiden, wobei der Anzeigenprozessor bzw. Bildprozessor angepasst ist, um eine Auswahl des geeigneten Modus für eine Anzeige zu ermöglichen, und zwar in Abhängigkeit von einem Bildinhalt.

6. System nach Anspruch 5, bei welchem ein Signal in einem Modus übertragen wird, wobei eine Kennung bzw. Marke die Verfügbarkeit anderer Modi anzeigt, wobei der Anzeigenprozessor bzw. Bildprozessor angepasst ist, um eine interaktive Auswahl eines alternativen Modus zur Übertragung zu ermöglichen.

## Revendications

1. Système d'interprétation d'images mobiles comprenant :
une caméra ayant une fréquence d'échantillonnage temporel élevée afin de minimiser le repliement temporel ;
un moyen pour calculer des axes de flux optique des images à partir de ladite caméra via des estimations de mouvement et pour déterminer des variations dans lesdites images par rapport auxdits axes ;
un moyen pour rééchantillonner lesdites informations d'axes de flux optique et des informations de variation d'image à des instants qui sont déterminés par le spectre temporel des informations d'axe de flux optique et des informations de variation d'image, respectivement, pour créer un signal n'ayant pas de débit d'image défini, lequel débit d'image varie selon le contenu de programme ;
un moyen pour communiquer ledit axe de flux optique et les informations de changement d'image à un processeur d'affichage dans des paquets dont chacun contient un code de temps ; et
ledit processeur d'affichage est adapté pour recevoir lesdites informations pour recréer des images mobiles par l'interpolation de mouvement compensé selon une norme ou un taux de rafraîchissement d'affichage voulu quelconque qui n'est pas déterminé par ladite fréquence d'échantillonnage de caméra et pas déterminé par lesdits instants de rééchantillonnage.

2. Système selon la revendication 1, dans lequel les informations d'axe de flux optique fournissent des informations de mouvement pour commander un traitement de réduction de bruit de mouvement compensé.

3. Système selon la revendication 1, dans lequel le sur-échantillonnage spatial est employé sur la caméra et/ou l'affichage.

4. Système selon l'une quelconque des revendications précédentes, dans lequel la fréquence d'échantillonnage temporel de la caméra est 100 Hz.

5. Système selon l'une quelconque des revendications précédentes, dans lequel un signal est transmis via un canal de transmission de limitation de bande passante dans au moins deux modes qui différent par rapport à là réduction de bande passante des fréquences temporelles et spatiales, le processeur d'affichage étant adapté pour permettre la sélection du mode approprié pour l'affichage, en fonction du contenu d'image.

6. Système selon la revendication 5, dans lequel un signal est transmis dans un mode avec une étiquette indiquant la disponibilité d'autres modes, le processeur d'affichage étant adapté pour permettre une sélection interactive d'un mode alternatif pour la transmission.
